# EUROPÄISCHE PATENTSCHRIFT

(11) **EP 0 708 719 B1**
(45) Veröffentlichungstag und Bekanntmachung des Hinweises auf die Patenterteilung: **21.06.2000**
(21) Anmeldenummer: 94924732.4
(22) Anmeldetag: 10.07.1994
(51) Int. Cl.: B60Q 7/00

(54) **VERFAHREN ZUR HERSTELLUNG EINER VORRICHTUNG ZUM EINSATZ IN NOTSITUATIONEN UND DANCH HERGESTELLTE VORRICHTUNG**
PRODUCTION PROCESS FOR A SAFETY DEVICE FOR USE IN EMERGENCY SITUATIONS AND THE PRODUCED DEVICE
METHODE DE FABRICATION D'UN DISPOSITIF A UTILISER EN CAS D'URGENCE ET DISPOSITIF PRODUIT SELON LA METHODE

(30) Priorität: 13.07.1993 DE 9310397 U
(43) Veröffentlichungstag der Anmeldung: 01.05.1996
(73) Patentinhaber: Gerriets, Gerrit D.A., D-33803 Steinhagen (DE); Bartling, Ludwig, 33617 Bielefeld (DE)
(72) Erfinder: Gerriets, Gerrit D.A., D-33803 Steinhagen (DE); Bartling, Ludwig, 33617 Bielefeld (DE)
(74) Vertreter: Kaminski, Susanne, Dr.
(86) Internationale Anmeldenummer: EP9402256
(87) Internationale Veröffentlichungsnummer: WO9502524

(56) Entgegenhaltungen:
- DE-U- 9 214 565
- FR-A- 2 332 684
- FR-A- 2 335 011
- GB-A- 2 199 358
- US-A- 2 881 662
- US-A- 4 541 190

## Beschreibung

Die Erfindung betrifft ein Verfahren zur Herstellung einer Vorrichtung zum Einsatz in Notsituationen, die in Gebrauchslage flächig, insbesondere einlagig, vorliegt, sowie die danach hergestellte Vorrichtung.

Derartige Vorrichtungen sind in vielfachen Ausführungen bekannt; so gibt es beispielsweise Warn- bzw. Anzeigevorrichtungen, die an KFZ-Windschutz- bzw. Heckscheiben angebracht werden können und Hinweise wie "Arzt", "Benzin", "Panne" und ähnliches tragen. Leider sind solche Vorrichtungen einerseits bei starkem Verkehr schwer auszumachen - man denke beispielsweise an eine bei Ferienbeginn oder -ende überfüllte Autobahn - und bleiben andererseits bei ungünstiger Witterung und/oder in an eher unbelebten bzw. "versteckten" Orten in Panne geratenen Kraftfahrzeugen gegebenenfalls sogar unentdeckt.

Aus der DE-U-92 14 5654 ist ein aus einer flexiblen Grundfolie bestehendes Pannen-Band bekannt geworden, das einseitig mit einem Haftkleber beschichtet ist, um es derartig auf glatten Oberflächen befestigen und von diesen wieder rückstandsfrei entfernen zu können.

Die FR-A-2335011 offenbart eine Signalvorrichtung, die aus faltbarem, stabilem Karton-Material besteht, und die solcherart als freistehendes, hochragendes Signal eingesetzt werden kann.

Beide Vorrichtungen sind auf handliche und leicht transportierbare Grösse zusammenleg- bzw. zusammenfaltbar. Sie können in Gebrauchslage flächig vorliegen, wobei dies für die Vorrichtung der FR-A-2335011 zwar möglich aber an sich nicht bevorzugt ist. Aufgrund des gewünschten Verwendungszwecks sind beide Vorrichtungen - wie auch von anderen Vorrichtungen bekannt - mit einem grossen Signalzeichen versehen, das sowohl durch die Symboldarstellung als auch seine Farbstellung visuell leicht erfass- und erkennbar ist.

Die nach dem erfindungsgemässen Verfahren hergestellte Vorrichtung hingegen ist - da jederzeit zur Hand, von kleiner Transportgrösse auf grossflächige Signalgrösse entfaltbar - auch an witterungsausgesetzten Aussenflächen ausbringbar, wie auf dem Autodach oder Hausdach, auf freiem Feld oder Wander- bzw. Klettersteigen. Denn abgesehen von der durch eine jedermann verständliche Mitteilungskraft des an der Oberfläche der Vorrichtung angebrachten Signalzeichens und der Grösse und des geeignet gewählten Farb-Kontrasts erzielten Wirkung auf potentiell anzusprechende Helfer ist erst durch die Möglichkeit, eine solche Vorrichtung unabhängig von der herrschenden Witterung einzusetzen, die Wirksamkeit gegeben. Nicht unwesentlich ist dabei, dass einerseits wenigstens die Oberfläche der Vorrichtung eine gegen Witterungseinflüsse widerstandsfähige Schicht aufweist, als auch, dass das Signalzeichen an eben dieser Oberfläche derart aufgebracht ist, dass auch bei ungünstiger Witterung weder die Gefahr besteht, dass dieses Signalzeichen abgetragen oder aufgelöst wird noch dass die visuelle Erkennbarkeit desselben wesentlich herabgesEtzt wird. Da derartige Vorrichtungen glücklicherweise eher selten gebraucht werden müssen, werden sie im allgemeinen jeweils für längere Zeit ungebraucht und zusammengefaltet mitgeführt werden, sei es in Autos, oder auf Wanderungen und Bergtouren, wobei sie gegebenenfalls auch sehr unterschiedlichen Temperaturen ausgesetzt sein können. Eine Vorrichtung, die dann - in einer Notsituation - auseinandergefaltet und an einer günstigen Stelle angebracht werden soll, darf dann keinesfalls - selbst bei der wahrscheinlich hektischen und nicht sorgsamen Handhabung - an den Faltstellen auch nur stellenweise brechen oder auseinanderfallen. Denn bei fahriger Handhabung könnten aufgrund derartiger Schwachstellen nicht nur grössere Risse resultieren, sondern es ist auch zu erwarten, dass beim Aufbringen im Freien die Vorrichtung unter dem Einfluss von Wind und Wetter zerlegt und zerrissen wird.

Eine solche Vorrichtung wird vorteilhafterweise bei der Suche nach dem Standort von in Not geratenen Personen einzusetzen sein, sei es bei der Suche aus der Luft, beispielsweise durch Rettungs- oder Polizei-Hubschrauber, oder sei es bei dem raschen und vereinfachten Auffinden von Standorten durch Notarztwagen, Feuerwehren oder Polizei.

Dadurch, dass die Vorrichtung auch aus grosser Höhe bzw. Entfernung eindeutig und verwechslungsfrei zu erkennen ist - und das im wesentlichen unabhängig von der Witterung - ist die Standortbestimmung eines Hilfesuchenden und damit die mögliche Hilfleistung für diesen gegeben.

Eine Vorrichtung, die zum Einsatz in Notsituationen gedacht ist, wird besonders vorteilhaft sein, wenn sie nicht nur als Aufforderung an potentielle Hilfeleistende und als Hinweis auf den Standort Verwendung findet, sondern noch zusätzlich dazu dem in diese Notsituation Geratenen - als Beispiele wurden bereits Wanderer und Kletterer aufgeführt - Schutz gegen Kälte und Nässe bietet. Die gegen Witterungseinflüsse widerstandsfähige Oberfläche der Vorrichtung mit dem darauf ebenso widerstandsfähig aufgebrachten Signalzeichen kann gegebenenfalls als Weste oder Umhang getragen werden. Dazu sollte die Vorrichtung wenigstens an ihrer Rückseite, die gegen den Körper gerichtet werden kann, eine die Körperwärme reflektierende Schicht besitzen. Metallschichten sind besonders geeignet, da sie einerseits als sehr dünne und damit auf kleinste Grösse zusammenfaltbare Folien vorliegen können und andererseits gleichzeitig als wasserabstossende Schicht und damit die Oberfläche für die Vorrichtung darstellen können. Damit auf solchen Metallfolien die Signalzeichen gut haften - Aufdrucken allein wird in diesem Fall aufgrund der oben dargestellten Anforderungen nicht ausreichend sein - sollte diese an der für die Aufnahme des Signalzeichens vorgesehenen Oberfläche einer Korona-Bestrahlung unterworfen worden sein.

Das Signalzeichen selbst bzw. ein es umgebender, eventuell dreieckiger, kreisförmiger, ovaler oder quadratischer Bereich sollte in von der Umgebung sich abhebenden und auch bei schlechten Sichtverhältnissen auffallenden Kontrastfarben ausgebildet sein. Katzenaugen-Elemente und phosphoreszierende Farbpigmente, insbesondere in orange-roter Farbgebung, werden sich dazu besonders anbieten.

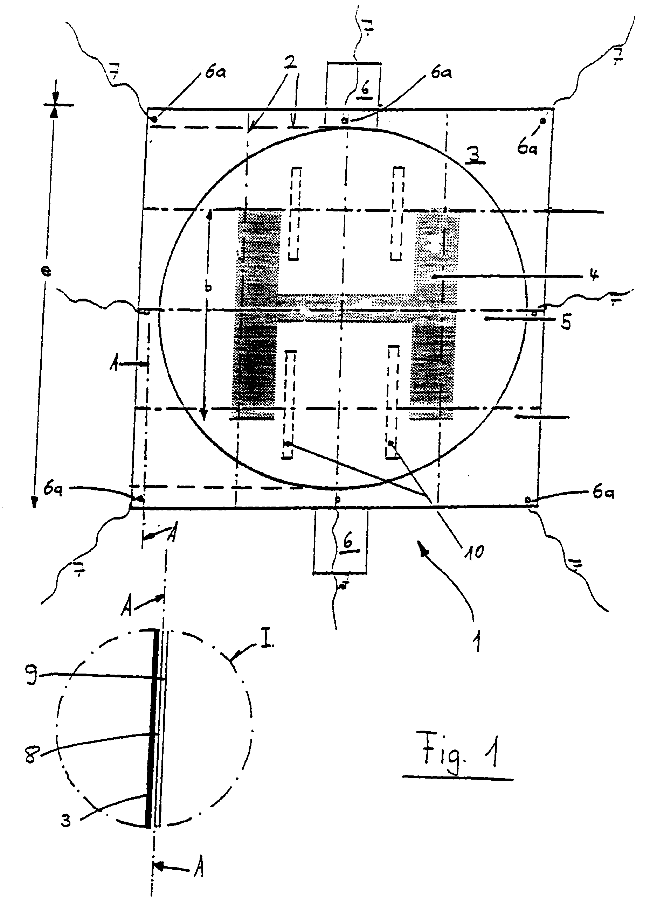

Die Erfindung wird im folgenden anhand der Figur beispielhaft beschrieben.

Eine Vorrichtung 1, die in Notsituationen eingesetzt werden kann, weist in offener Gebrauchslage in wenigstens einer Längsrichtung eine Erstreckung e von ca. 90 cm auf. Die flächige Vorrichtung 1 liegt einlagig vor, wobei, wie aus dem Detailschnitt I zu ersehen ist, diese Lage mehrere Schichten 3,8,9 aufweisen kann. Die Oberfläche 3 der Vorrichtung 1 ist wasserabstossend und/oder windundurchlässig, so kann sie beispielsweise als Kunststoffbeschichtung auf einer textilen Trägerschicht ausgebildet sein.

Ein Signalzeichen 4 ist auf der Oberfläche 3 angebracht. Die möglichen Signalzeichen 4 sollten eine angemessene Grösse haben, so sind diese beispielsweise bei einer Buchstabengrösse b von ca 60 cm auch aus grossen Entfernungen gut zu erkennen. Eindeutig die Notsituation erkennbar machende Zeichen wie "H" für "Hilfe", "Help" oder "Hjelp" bzw. andere, dem jeweiligen Land entsprechende, aussagekräftige Symbole sind damit unmissverständlich.

Das Signalzeichen 4 selbst bzw. eine es umgebender, gegebenenfalls kreisförmiger oder quadratischer Bereich 5 ist in gut erkennbaren Signalfarben, beispielsweise in Orange-Rot gehalten. Die Oberfläche 3 bzw. gegebenenfalls das Signalzeichen 4 sind in entsprechenden Kontrastfarben, beispielsweise in Weiss, gestaltet.

Reflektierende Farben bzw., reflektierende Partikel erhöhen die Erkennbarkeit der Vorrichtung, selbst bei ungünstigen Sichtbedingungen. So kann die Grundfarbe der Oberfläche 3 signalrot oder -orange sein, während der oder die Buchstaben des Signalzeichens 4 kontrastierend in Signalweiss oder Schwarz ausgeführt sind. In Anlehnung an normierte Notsignalfarben, wie von Rettungsdiensten bekannt, sollte bei der Farbgestaltung auf die Verwendung derartiger Normfarben zurückgegriffen werden.

Die Vorrichtung ist beispielsweise aus 100%-Polyethylen-Spinnvlies (HDPE) hergestellt. Die Vorzüge dieses Materials sind bekannt: sehr leicht, reissfest, unverwüstlich, wasserfest, verschleissfest, leicht faltbar, bedruckbar und zu 100% recyclebar.

In dünner Lage vorliegende Vorrichtungen sollten an wenigstens zwei Seiten Mittel 6,7 zur Befestigung bzw. zum Festhalten derselben vorgesehen sein, wie beispielsweise Laschen oder Ösen. Die Vorrichtung kann beispielsweise an Automobilen zwischen den Seitenscheiben festgeklemmt werden wenn sie über das Dach ausgelegt worden ist. An den Laschen 6 oder Griffen können gegebenenfalls noch andere Befestigungseinrichtungen angeordnet sein, wie Bänder oder Schnüre 7, die auch durch an der Vorrichtung 1 angebrachte Ösen 6a gezogen sein können.

Die seitlichen Laschen oder Griffe eignen sich beim Auslegen in freiem Gelände zur Fixierung der Vorrichtung mittels beschwerender Gegenstände, ohne dass das Rettungssignal überdeckt wird.

Selbstklebebänder 10 (strichliert angedeutet) an der Rückseite 9 (Detail I) der Vorrichtung 1 ermöglichen ein auch bei windigem Wetter sicheres, vollfächiges Auslegen. Gegegebenfalls kann die gesamte Rückfläche mit Haftelementen versehen sein, bzw. eine entsprechend rauhe Oberfläche besitzen.

Ist die Rückseite 9 beispielsweise mit Aluminium beschichtet, so kann die Vorrichtung 1 einem in Notfall Geratenen gegebenenfalls als Schutz gegen Nässe und Kälte dienen. Die Körperwärme wird reflektiert, die um den Körper in Art eines Umhangs gewickelte Vorrichtung wirkt aber trotzdem mit seiner nach aussen getragenen, wasserabstossenden und mit dem Signalzeichen versehenen Oberfläche als Standort-Signal. Abgesehen von der Verwendung als Schutz eines Verunglückten gegen Nässe oder Kälte kann die Vorrichtung auch als Schutzunterlage benutzt werden.

Eine solche auch als Rettungsdecke verwendbare Vorrichtung kann mehrschichtig ausgebildet sein, so vorzugsweise eine Aluminium- 9 und eine Goldschicht 8 aufweisen, wie im Detailschnitt I angedeutet. Damit die auf solchen Metallschichten aufgebrachten, insbesondere aufgedruckten, Signalzeichen unabhängig von Witterungseinflüssen haften bleiben, sollte die Metallschichtoberfläche vorbehandelt sein, sodass die Haftkraft zwischen Metall und Signalzeichen-Farbe erhöht wird. Dazu können entweder haftungsvermittelnde Haftgrundmittel in dünnsten Schichten aufgetragen werden, oder es kann die Metalloberfläche angerauht werden, was beispielsweise über eine Korona-Bestrahlung der Oberfläche möglich ist. Die danach aufzudruckenden, insbesondere lösungsmittelhaltigen, Farben können dann besonders dauerhaft aufgebracht werden, wenn die Farbe vortemperiert wurde. Die Farbe wird damit selbst beim Zusammenfalten der Folie nicht zum Absplittern neigen.

Zur Verbesserung der Haftung von Signalzeichen auch an Kunststoffschichten werden diese vorzugsweise vorbehandelt, aufgerauht oder auch mit einer Schicht Haftgrundmittel versehen.

Trotz der an sich grossen Grundfläche der Vorrichtung in Gebrauchslage kann die Vorrichtung 1 aufgrund der vorgesehenen Materialien bei Nichtbenutzung bequem mitgeführt werden. Ob Folie, oder Vlies, die auf kleinstes Mass zusammengefaltete Vorrichtung ist jederzeit im Bedarfsfall zur Hand, kann ohne Bruch- oder Rissgefahr an den Faltlinien 2 auseinandergefaltet und unabhängig von den Witterungsbedingungen eingesetzt werden.

Die Vorrichtung 1 kann jede bequem faltbare Flächenfornm besitzen, rechteckig oder kreisrund oder auch oval.

Die Rückseite 9 der Vorrichtung 1 kann ein weiteres Signalzeichen tragen, beispielsweise ein Warndreieck, ein Ausrufezeichen oder ein in dem jeweiligen Land, wo es Verwendung finden soll, allgemein bekanntes Warnzeichen. Die Rückseite ist dann in gleicher Weise auszubilden wie oben anhand der Oberfläche dargestellt, damit einerseits Widerstandfähigkeit gegen Witterungseinflüsse und andererseits Sichtbarkeit des Signalzeichens gegeben ist.

Für Wanderer oder andere Sportler, wie z.B. Mountainbyker, kann die Vorrichtung in einer kleinen Tasche untergebracht werden, die vorzugsweise als Gürteltasche ausgebildet ist. An der Rückseite der Tasche sind dann eine oder mehrere Schlaufen bzw. zwei vertikale Schlitze angebracht, durch die sich Gürtel verschiedener Breite ziehen lassen. So kann die Vorrichtung bequem bei sich getragen werden, ist in einem Notfall immer griffbereit und geht auch bei einem Sturz nicht verloren.

Dabei ist auf der Aussenseite der Tasche oder auch der - beispielsweise in einem Auto mitgeführten - Verpackung vorzugsweise ein deutlicher Hinweis angebracht, dem Inhalt und Zweck der darin befindlichen Vorrichtung eindeutig zu entnehmen ist. Der auf der Tasche bzw. der Verpackuzng aufgebrachte Hinweis ist dabei insbesondere analog dem Signalzeichen. Verpackung oder Tasche sollten vorzugsweise in auffälliger Signalfarbe gehalten sein.

Im folgenden werden einige Beispiele für die Verwendung der Vorrichtung dargestellt:
A: Während eines anhaltenden Staus auf der Autobahn bekommt eine schwangere Frau Geburtswehen. Über die Notrufsäule ist der Rettungsdienst verständigt. Dem überfliegenden Hubschrauberpiloten wird freundlich von anderen, im Stau Befindlichen, zugewunken. Der Pilot wird dadurch "verwirrt". Durch die auf dem Autodach ausgebreitete Vorrichtung kann der Pilot den Standort einwandfrei und schnell bereits aus grosser Höhe feststellen.
B: Auf einsamer Landstrasse erleidet ein Autofahrer einen Infarkt. Trotz Notruf über Autotelefon kann er oder der Beifahrer, den Standort nur sehr vage beschreiben, wie: "zwischen X und Y.." Die Retter können jedoch die grossflächige Vorrichtung auch aus grosser Entfernung deutlich ausmachen; die Suche wird erheblich verkürzt.
C: Ein (Berg-/Watt-/Feld-/Wald-/Wiesen-) Wanderer verunglückt. Dank des leichten Gewichtes hat er die Vorrichtung mitgeführt und kann sie ausbreiten. Eine nach Vermisstmeldung eingeleitete Suchaktion wird erheblich vereinfacht, die Chancen den Verunglückten zu finden, sind ganz wesentlich verbessert.
D: Ein Segel- oder Motorschiff hat eine Havarie. Auch hier sorgt die Vorrichtung für schnelle und leichte Identifizierung.
E: Auch aus Dachfenstern, Dreh- und Kippfenstern kann die Vorrichtung ausgelegt werden, wobei sie an den Laschen oder mittels der Schnüre befestigt oder auch an Balkonbrüstungen oder Bäumen angebracht werden kann. Das kann sich insbesondere bei angefordertem Notarzt oder bei Rettungswagen- und Feuerwehreinsätzen in unübersichtlichen Wohngebieten oder auch ausserhalb geschlossener Ortschaften als vorteilhaft erweisen. Schnelles Auffinden auch bei unklaren oder nicht vorhandenen Hausnummern wird möglich.

## Patentansprüche

1. Verfahren zur Herstellung einer Vorrichtung (1) zum Einsatz in Notsituationen, die in Gebrauchslage flächig, insbesondere einlagig, vorliegt und auf handliche und leicht transportierbare Grösse zusammenlegbar, insbesondere zusammenfaltbar, ist, wobei eine Schicht aus Kunststoff, vorzugsweise 100%iges Polyethylen-Spinnvlies (HDPE) wenigstens einseitig mit einer Wärme-reflektierenden, beispielsweise Aluminium-, Schicht beschichtet wird, und wobei anderseitig diese Schicht aus Kunststoff aufgerauht, beispielsweise einer Koronabestrahlung unterworfen, oder mit einer Schicht Haftgrundmittel versehen wird, worauf auf diese letztere, die Oberfläche (3) der Vorrichtung darstellende Schicht ein Signalzeichen (4) aufgebracht, insbesondere aufgedruckt, wird, das sowohl durch seine Grösse und leicht erfassbare Symboldarstellung als auch durch seine Farbstellung visuell leicht erkennbar ist, wobei Bereiche (5) der Oberfläche (3) mit totalreflektierenden optischen Elementen versehen werden, die gegebenenfalls das Signalzeichen (4) bilden.

2. Verfahren nach Anspruch 1, dadurch gekennzeichnet, dass die Farbe zum Aufdruck des Signalzeichens (4) vor dem Auftragen vortemperiert wird, wobei insbesondere eine lösungsmittelhaltige Farbe verwendet wird.

3. Verfahren nach Anspruch 1 oder 2, dadurch gekennzeichnet, dass - vorzugsweise an gegenüberliegenden Randbereichen der Vorrichtung - Mittel (6,7) zum Befestigen bzw. Halten der Vorrichtung an unterschiedlichen Trägergegenständen angeordnet werden, wobei die Befestigungs- bzw. Haltemittel (6,7) Ösen oder Schlaufen umfassen können und wobei alternativ oder auch zusätzlich dazu selbsthaftend ausgebildete Bereiche an der Rückseite der Vorrichtung angeordnet werden.

4. Vorrichtung (1) zum Einsatz in Notsituationen, die in Gebrauchslage flächig, insbesondere einlagig vorliegt und auf handliche und leicht transportierbare Grösse zusammenlegbar, insbesondere zusammenfaltbar, ist, erhältlich nach einem Verfahren nach einem der Ansprüche 1 bis 3.

## Claims

1. Process for the production of a device (1) for use in emergency situations, which is present in flat form, in particular as a single layer, in the position of use and is collapsible, in particular foldable, to a convenient and easily transportable size, a plastics layer, preferably 100% polyethylene spunbonded fabric (HDPE), being laminated at least on one side with a heat-reflecting, preferably aluminium, layer, and this plastics layer being roughened on the other side, for example subjected to corona irradiation, or being provided with a primer coat, whereupon a signal symbol (4) which is easily visually detectable both because of its size and easily recognizable symbol representation and because of its colour is applied to, in particular printed on, said primer coat representing the surface (3) of the device, regions (5) of the surface (3) being provided with totally reflecting optical elements which optionally form the signal symbol (2).

2. Process according to Claim 1, characterized in that the ink for printing on the signal symbol (4) is prethermostated before application, in particular a solvent-containing ink being used.

3. Process according to Claim 1 or 2, characterized in that means (6, 7) for fastening or holding the device are arranged on different support objects, preferably on opposite edge regions of the device, it being possible for the fastening or holding means (6, 7) to have eyes or loops and, alternatively or in addition thereto, regions having self-adhesive properties being arranged on the back of the device.

4. Device (1) for use in emergency situations which is present in flat form, in particular as a single layer, in the position of use and is collapsible, in particular foldable, to a convenient and easily transportable size, obtainable by a process according to any of Claims 1 to 3.

## Revendications

1. Procédé de fabrication d'un dispositif (1) à utiliser en cas d'urgence, qui, à l'état d'utilisation, se présente sous forme plate, en particulier en monocouche, et peut être mis à une taille permettant sa manipulation et un transport aisé, en particulier peut être replié, une couche en matière synthétique, de préférence un matelas filé constitué à 100 % de polyéthylène (HDPE), étant revêtu, au moins sur une face, d'une couche réfléchissant de la chaleur, par exemple d'une couche d'aluminium, et cette couche étant sur l'autre face rendue rugueuse, par exemple, soumise à un rayonnement corona, ou bien dotée d'une couche d'un produit de fond adhésif, suite à quoi sur cette dernière couche, constituant la surface (3) du dispositif, est appliqué, en particulier par impression, un caractère de signalisation (4) qui, tant par sa taille et sa représentation symbolisée aisément perceptible, qu'également par sa coloration, est identifiable visuellement, des zones (5) de la surface (3) étant dotées d'éléments optiques à réflexion totale, qui constituent le cas échéant le caractère de signalisation (4).

2. Procédé selon la revendication 1, caractérisé en ce que la couleur utilisée pour l'impression du caractère de signalisation (4) est soumise avant application à un prétraitement d'équilibrage, en particulier une couleur contenant un solvant étant utilisée.

3. Procédé selon la revendication 1 ou 2, caractérisé en ce que des moyens (6, 7) sont disposés - de préférence sur des zones de bordure opposées du dispositif - pour fixer ou maintenir le dispositif sur des objets support différents, les moyens de fixation ou de maintien (6, 7) pouvant comprendre des oeillets et des boucles et, en variante ou également en plus, des zones auto-adhésives étant disposées sur la face arrière du dispositif.

4. Dispositif (1) à utiliser en cas d'urgence, qui, à l'état d'utilisation, se présente sous forme plate, en particulier en monocouche, et peut être mis à une taille permettant sa manipulation et un transport aisé, en particulier peut être replié, obtenu suivant un procédé selon l'une des revendications 1 à 3.
